# EUROPÄISCHE PATENTSCHRIFT

(11) **EP 1 505 070 B1**
(45) Veröffentlichungstag und Bekanntmachung des Hinweises auf die Patenterteilung: **02.11.2006**
(21) Anmeldenummer: 04103722.7
(22) Anmeldetag: 02.08.2004
(51) Int. Cl.: C07F 7/12

(54) **Verfahren zur Herstellung von Chlorsilanen**
Process for preparing chlorosilanes
Procédé de préparation de chlorosilanes

(30) Priorität: 05.08.2003 DE 10336545
(43) Veröffentlichungstag der Anmeldung: 09.02.2005
(73) Patentinhaber: GE Bayer Silicones GmbH & Co. KG, 51368 Leverkusen (DE)
(72) Erfinder: Wagner, Roland, Dr., 53757 St. Augustin (DE); Eversheim, Hubertus, 42929 Wermelskirchen (DE); Maecker, Ralf, 51379 Leverkusen (DE); Lange, Horst, Dr., 44879 Bochum (DE)

(56) Entgegenhaltungen:
- EP-A- 0 574 912

## Beschreibung

Die Erfindung betrifft ein Verfahren zur Herstellung von Chlorsilanen, insbesondere ein Verfahren zur Herstellung von Chlorsilanen, bei dem methylreiche Polysilan- und Siloxanrückstände aus der Müller-Rochow-Synthese oder einer Chlorsilansynthese vermindert werden, in dem sie in leichter siedende Produktfraktionen umgewandelt werden.
Die Müller-Rochow-Synthese zur Herstellung von Dimethyldichlorsilan und anderen Alkyl-, Halogen und SiH-Funktionen tragenden Silanen aus Silicium, Methylchlorid und Cu-basierten Katalysatoren führt nach derAbtrennung der Zielprodukte über Zyklonsysteme und Destillationen zu einem Zwangsanfall von weiteren Nebenprodukten.
So fällt ein Siliciumfeinanteil an, der bedeutende Mengen eines sehr breiten Spektrums an Metallen, Metallverbindungen und Metallhalogeniden, speziell von Cu, Al, Zn, Sn, enthält. Dieser Feinanteil wird üblicherweise nach Passivierung deponiert oder aber als Rohstoff für den Metallguß oder als schlackebildender Zusatzstoff für Hüttenwerke genutzt. Es ist weiterhin vorgeschlagen worden, diesen Feinanteil intensiv mit Silanen zu waschen und der Müller-Rochow-Synthese wieder zuzuführen (US 6,090,360). Alternativ kann in einem aufwändigen Hochtemperaturprozeß dieser Feinanteil mit HCl oder Cl₂ in Halogensilane überführt werden. Die Behandlung des von feinanteiligem Silicium mit HCl in einem inerten Lösungsmittel ist ebenfalls schon beschrieben worden (JP 3248390 B2 equivalent zu JP 8277104).
Nach Isolierung der Hauptprodukte der Müller-Rochow-Synthese bleibt ein hochsiedender oftmals flüssiger Rückstand zurück, der aus einer komplexen Mischung von vorwiegend Polysilanen, gemischt mit Siloxanen und Carbosilanen besteht. Halogendisilane können mit Alkylhalogeniden und CuCl gespalten werden (US 2,474,087). Es ist weiter bekannt, diese Hochsieder mit HCl in Gegenwart von tertiären Aminen in verwertbare Halogensilane zu spalten (US 2,709,176, US 2,842,580). Eine andere Möglichkeit der Verminderung der Hochsieder besteht darin, diese ohne Zusatz von HCl in Gegenwart von Aminen bzw. Ammoniumverbindungen zu monomeren Chlorsilanen und oligomeren Silanen umzusetzen (EP 0 610 809), wobei die Disilane unter Verwendung von heterocyclischen Aminen mit mindestens einem N-Atom in monomere und oligomere Alkylhalogendisilane disproportioniert werden. Hierzu offenbart die DD 274 227 weitere Katalysatoren wie Alkylharnstoffe oder Hexamethylphos-phorsäuretriamid (HMPTA).

Es ist ebenfalls vorgeschlagen worden, hochsiedende Bestandteile wie die Disilane der Methylchlorsilansynthese in Gegenwart von Katalysatoren wie Aminen, Amiden oder quaternäre Ammoniumsalze und Chlorwasserstoff umzusetzen, mit der Bedingung, dass die Menge von Fe, Al, Zn, Sn und deren anwesenden Verbindungen im Reaktionssystem weniger als die äquimolare Menge der Katalysatoren beträgt. (US 5,922,893). Die US 5,502,230 offenbart die Umsetzung von hochsiedenden Disilanen der Direktsynthese mit
HCl in Gegenwart von Pt- oder Pd-basierten Katalysatoren, denen tertiäre Amine oder Phosphine zugegeben werden .
Ein zweiter Ansatz zur Spaltung dieser Hochsieder geht von einem katalytischen Basissystem HCl/AlCl₃ aus. Hier sollen sich Zusätze von SbCl₅ positiv auf die katalytische Aktivität auswirken (US 5,629,438). Alternativ wurde dem System HCl/AlCl₃ zur Verbesserung der Silanausbeute Methyltrichlorsilan zugesetzt (US 5,627,298). Der Zusatz von Wasserstoff zu HCl/AlCl₃ ist ebenfalls beschrieben worden (US 5,292,909, US 5,292,912).
Ein weiterer Ansatz zur Spaltung der Hochsieder geht von wasserstoffhaltigen Systemen in Abwesenheit von HCl aus. Hierbei ist die Kombination H₂/AlCl₃ beschrieben worden (JP 2001064008, US 5,326,896, US 5,430,168. Die US 6,013,235 offenbart ebenso wie US 6,344,578 (EP 1179534) dabei die gleichzeitige Umsetzung von anwesendem Silicium (silicon metalloids) zu Chlorsilanen bei Temperaturen bei 150-500°C. Eine Verbesserung des Systems H₂/AlCl₃ soll durch einen SbCl₅ Zusatz erreicht werden (US 5,606,090). Eine 'in situ'- Bildung von AlCl₃ wird mit dem System H₂/CaCl₂ +Al₂O₃/ Methyl-trichlorsilan/Pd-Pt erreicht (US 5,175,329, US RE 35298).
Hier wird ein Verfahren offenbart, in dem man Disilane der Direktsynthese katalytisch hydriert.
Die Kombination von LiAlH₄/H₂ wurde ebenfalls als vorteilhaft erkannt (US 5,922,894).
Schließlich sind auch HCl- und H₂₋freie Spaltungsreaktionen bekannt. Die Umsetzung von Disilanen mit Alkylhalogeniden in Gegenwart von speziellen Pd-, Ni- bzw. Pthaltigen Phosphinkatalysatoren soll ebenfalls zu Monosilanen führen (US 3,772,347). Weiterhin ist bekannt, dass sich Hexamethyldisilan mit Tetramethyldichlordisilan in Gegenwart von AlCl₃ zu verwertbaren Produkten umsetzen läßt (US 4,266,068).
US 4,393,229 (DE 3314734) beansprucht ein Verfahren zur Behandlung von alkylreiche Disilane enthaltenden Rückständen, dass die Schritte umfaßt, die Rückstände mit Alkyltrihalogensilanen oder Siliciumtetrahalogenid in Gegenwart eines Katalysators und einer katalytischen Menge eines Hydrogensilan-Reaktionspromotors bei erhöhten Temperaturen umzusetzen, um ein halogenreicheres Disilan- und Dialkyldihalogensilan haltiges Disproportionierungs- bzw. Umlagerungsprodukt zu erzeugen.
Als mögliche alternative Wasserstoffquelle werden Hydrogensilane beschrieben.
Die Beschreibung offenbart weiterhin, dass mit diesem Prozess die in der Disilanspaltung nicht weiter spaltbaren Rückstände bzw. Disilane, die bisher verbrannt werden mußten, nunmehr zu spaltbaren höherwertigen Produkten umgewandelt werden können.
Die EP 155626 beschreibt ein Verfahren zur Herstellung von Dimethyldichlorosilan aus den niedrigsiedenden und hochsiedenden Neben-produkten der Direktsynthese von Methylchlorsilanen, das darin besteht, Methyltrichlorsilan mit den Leichtsieder-Bestandteilen, die einen hohen Anteil an Methylgrupen haben mit den nicht spaltbaren Hochsiederbestandteilen in Gegen-wart eines Katalysators bei Temperaturen zwischen 250 °C und 400 °C und unter einem Druck bis zu 100 bar gleichzeitig zur Reaktion zu bringen.
Die EP 869129 (US 5,877,337) beansprucht ein kontinuierliches Verfahren zur Herstellung von Alkylchlorsilanen aus den Rückständen der Direktsynthese von Alkylchlorsilanen, welche flüssige Bestandteile mit einem Siedepunkt von mindestens 70°C bei 1013 hPa und Feststoffe aufweisen, durch Erhitzen der Rück-stände mit Chlor-wasserstoff bei Temperaturen von 300 bis 800°C in einem Rohr-reaktor mit drehbaren Einbauten. Die EP 1179534_B1 (US 6,344,578) offenbart, wie man die feststoffhaltigen Rückstände der Müller Rochow-Synthese mit HCl oberhalb 300 °C in Siliciumtetrachlorsilan und Trichlorsilan umwandelt. Es soll ebenfalls möglich sein, Polysilane mit HCl/Silicium zu spalten..

Die EP 574912 (US 5,288 892) beansprucht ein Verfahren zur Gewinnung von Methylchlorsilanen aus hochsiedenden Rückständen der Methylchlorsilansynthese, wobei in den Rückständen vorhandene spaltbare Methylchlordisilane, mit Chlorwasserstoff in Gegenwart eines im Reaktionsgemisch verbleibenden Katalysators gespalten werden, dadurch gekennzeichnet, dass die Spaltung der Methylchlordisilane in Gegenwart der leichter als die spaltbaren Methylchlordisilane flüchtigen Nebenprodukte der hochsiedenden Rückstände der Methylchlorsilansynthese, die einen Siedepunkt von mindestens 70°C bei Normalbedingungen aufweisen, abläuft, wobei die leichterflüchtigen Nebenprodukte kontinuierlich zusammen mit den Methylchlorsilanen und den nicht spaltbaren Methylchlordisilanen aus dem Reaktionsgemisch entfernt werden. Als Katalysatoren sind hierzu teriäre Amine offenbart.

Es wird hier allerdings in keinem Beispiel gezeigt, weder wie unter diesen Bedingungen die nicht spaltbaren Disilane (Fraktion 1 und 2 Tabelle 1 =Mittelsieder) in niedrig siedende Produkte überführt werden können, noch wird gezeigt, ob dieses Verfahren auch diejenigen Bestandteile in niedrig siedende Chlorsilane überführt, welche einen Siedepunkt haben, der über denjenigen Disilanen des dort genannten Beispieles 2 liegt und zur Fraktion 4 der Tabelle auf S. 2 gehören würden. Die Fig. 2 der EP 574912 A1 mit dem erfindungsgemäßen Verfahrensfließbild sieht keine Rückführung des im Sumpf von Kolonne/Behälter 16 verbleibenden Hochsieders in z.B. den Behälter 13 also einen im Produktstrom bzw. Verfahrensablauf vorausliegenden Reaktions-behälter vor.

Der Nachteil all der vorgenannten Aufarbeitungsvorschläge liegt bisher zunächst darin, dass der Feststoffaustrag bzw. Feinanteil und die Hochsiederfraktion isoliert voneinander behandelt werden sollen, was grundsätzlich zu einem hohen technischen Aufwand führt, da jede Reaktion getrennt für sich durchgeführt werden muß und einen eigenständigen Prozessschritt darstellt.
Viele der zitierten Aufarbeitungsvarianten für den hochsiedenden Anteil oberhalb 150°C führen zu einer ungenügenden Umsetzung, so daß weiterhin große Zwangsanfallströme kostenintensiv verbrannt werden müssen. Die Handhabung einiger für die Umsetzung der Hochsieder vorgeschlagenen Reaktanden (z.B. H₂, LiAlH₄) setzt unter den technischen Bedingungen der Direktsynthese einen weiteren zusätzlichen hohen Sicherheitsaufwand voraus.
Die zitierten Lösungen zur Behandlung, d.h. Passivierung oder Trennung, des Feinstanteiles (< 5 µm) sind dem Wesen nach sehr lösungsmittelintensiv oder thermisch sehr aufwändig.

Aufgabe der Erfindung ist es, ein Verfahren zur Herstellung von Chlorsilanen bereitzustellen, bei dem der Anteil der Hochsieder in hohem Ausmaß unter Ausnutzung bestehender üblicher Anlageteile der Müller-Rochow-Synthese verringert werden kann. Dies sind die üblicherweise vorhandene Einheit zur Spaltung von Disilanen mit Chlorwasserstoff und die Einheit eines 'Slurry Evaporators', d.h. Schlammkessels.
Die vorliegende Erfindung stellt somit ein Verfahren zur Herstellung von Chlorsilanen bereit, dass die Schritte umfasst:
a) Umsetzung von Silizium mit Alkylhalogeniden, Arylhalogeniden oder Chlorwasserstoff,
b) Umsetzung mindestens einer hochsiedenden Produktfraktion aus Schritt a) mit mindestens einem Halogenid und
c) Umsetzung mindestens einer aus Schritt b) resultierenden hochsiedenden Produktfraktion mit Alkylhalogeniden, Arylhalogeniden und/oder Chlorsilanen.

Die nach dem erfindungsgemäßen Verfahren erzeugten Chlorsilane schließen beispielsweise ein: Alkylchlorsilane, Arylchlorsilane, Alkylhydrogenchlorsilane, Alkylarylchlorsilane, Hydrogenchlorsilane und Perchlorsilane. Bevorzugt werden nach dem erfindungsgemäßen Verfahren insbesondere Alkylchlorsilane, wie Dimethyldichlorsilan, Methyltrichlorsilan, Dimethylchlorsilan, und Methyldichlorsilan hergestellt. Bevorzugte nach dem erfindungsgemäßen Verfahren herstellbare Arylchlorsilane schließen beispielsweise Diphenyldichlorsilan und Phenyltrichlorsilan ein. Bevorzugte nach dem erfindungsgemäßen Verfahren erhaltene Hydrochlorierungsprodukte sind Hydrogenchlorsilane und Perchlorsilane, wie insbesondere Hydrogentrichlorsilan, Tetrachlorsilan und Dihydro-gendichlorsilan.

### Schritt a)

Schritt a) des Verfahrens umfasst die in an sich bekannter Weise durchgeführte Müller-Rochow-Synthese mit Alkylhalogeniden oder Arylhalogeniden, oder die verschiedenen Verfahren der Hydrochlorierung von Silizium.
Alkylhalogenide, die in Schritt a) schließen beispielsweise ein C1 bis C8 Alkylhalogenide, wie beispielsweise Methylchlorid, Ethylchlorid, Butylchlorid und Hexylchlorid. Besonders bevorzugt ist das Methylchlorid. Arylhalogenide, die in Schritt a) eingesetzt werden können, schließen beispielsweise C6-C10 Arylhalogenide, wie bevorzugt Chlorbenzol ein.
Als in Schritt a) einsetzbares Silizium kann beispielhaft erwähnt werden: L. Nygaard Alloying of Silicon and its Influence on Reactivity' in Silicon for Chemical Industry S. 47 ff. Geiranger Norway 1992, Ed.: H.A. Oeye u. H.Rong.
Es ist bekannt, dass als Katalysator in den Umsetzungen gemäß Schritt a) Katalysatoren verwendet werden, die im wesentlichen aus Kupfer bzw. Kupferverbindungen bestehen, und die als sogenannte Promotoren Zink und Zinn oder deren Verbindungen enthalten. Darüber hinaus können weitere Promotoren einschließen: Elemente der 5. Hauptgruppe, wie z.B. Phosphor, Arsen, Antimon oder deren Verbindungen, der 3. Hauptgruppe, wie z.B. Bor, Aluminium und Indium oder deren Verbindungen. Die Arylchlorsilane werden insbesondere unter Verwendung von silberhaltigen Katalysatoren hergestellt.
Weiterhin ist bekannt, dass das für das Verfahren eingesetzte Silizium rohstoffbedingt und durch gezielte Raffination eine Reihe von katalytisch wirksamen Bestandteilen enthält, wie z.B. Cu, Zn, Sn, Al, Fe, Ca, Mn, Ti, Pb, Cr, Mg, Ni, B und P.
Die genannten Verfahren der Müller-Rochow-Synthese und der Hydrochlorierung von Silizium sind beispielsweise beschrieben in EP 191502; US 4,500,724; US 4,307,242; US 4,281,149; und US 4,130,632.
Die Reaktionsbedingungen des Schrittes a) sind an sich bekannt. Die Umsetzungen werden im allgemeinen in einem Temperaturbereich von etwa 170 bis 600°C, bei Drücken von etwa 0,3 bis 30 bar, bevorzugt in einer Gas-Feststoffreaktion durchgeführt. Bevorzugt werden Reaktoren, wie Rührbett-, Wirbelbett-, Sprudel- und Fließbettreaktoren aber auch Schachtöfen eingesetzt. Besonders bevorzugt erfolgt die Umsetzung in einem Wirbelbettreaktor.
Das erfindungsgenäße Verfahren ist bei allen bekannten Müller-Rochow-Synthesen und den Verfahren der Hydrochlorierung von Silizium anwendbar. Bevorzugt wird es im Rahmen der Müller-Rochow-Synthese mit Alkylhalogeniden, wie insbesondere Methylchlorid angewendet.
In Schritt a) werden überwiegend die vorstehend beschriebenen, gewünschten Produkte wie z.B. hauptsächlich Dimethyldichlorsilan bei Verwendung von Methylchlorid als Halogenid, gebildet. Daneben kommt es jedoch auch zur Bildung höhersiedender Produkte, wie in der folgenden Tabelle 1 anhand der verschiedenen Produkte der Umsetzung von Methylchlorid mit Silizium exemplarisch gezeigt.

**Tabelle 1 Beispielhafte Zusammensetzung der hochsiedenen Methylchlorsilane der Müller-Rochow Synthese**

| | |
|---|---|
| 72- 140 °C N.D. Fraktion 1 | |
| Ethylmethyldichlorsilan ¹) | |
| Methylpropyldichlorsilan | |
| Ethyldimethylchlorsilan | |
| Tetramethyldichlordisiloxan | |
| Trimethyltrichlordisiloxan | |
| Hexamethyldisilan | |
| Kohlenwasserstoffe | |
| | |
| 140 -155 °C N.D. Fraktion 2 | |
| Pentamethylchlordisilan | |
| Tetramethyldichlordisilan ¹⁾ | |
| Trimethyltrichlordisilan | |
| Dimethyltetrachlordisilan | |
| Dimethyltetrachlordisiloxan u.a Disiloxane u. C2-C4-disilane | |
| | |
| 155 -160 °C N.D. Fraktion 3 | |
| | |
| Trimethyltrichlordisilan ¹) | |
| Dimethyltetrachlordisilan ¹) | |
| | |
| 160 °C N.D. Fraktion 4 | |
| Oligomethylchloroligosilane | |
| Carbosilane , wie | |
| | Bis-Methyldichlorsilylmethylen |
| | 1,1,1-(Trichlorsilyl)(methyldichlorsilyl)methylen und Homologe |
| Höhersiedende Methylchlorsiloxane | |

| | |
|---|---|
| 1) Hauptkomponente | |

Bei den in den Reaktionschritten b) bis c) zuzuführenden Chlorsilanen handelt es sich also vorzugsweise um Mono-, Di- und Trichlorsilane, die Alkyl - bzw. H-substituiert sind. Beispielhaft werden HSiCl₂CH₃, HSiCl(CH₃)₂, SiCl₃CH₃, HSiCl₃, SiCl₂(CH₃)₂, SiCl(CH₃)₃, SiCl₄, Si(CH₃)₄, Si₂Cl₅(CH₃), Si₂Cl₄(CH₃)₂, Si₂Cl₃(CH₃)₃, Si₂Cl₂(CH₃)₄, Si₂Cl(CH₃)₅ Si₂(CH₃)₆ genannt Es ist bevorzugt, diese Silane als Mischung einzusetzen.

Erfindungsgemäß wird in Schritt b) mindestens eine hochsiedende Produktfraktion aus Schritt a), der Müller-Rochow-Synthese bzw. der Hydrochlorierungsverfahren mit Halogeniden, umgesetzt.
Die hochsiedende Produktfraktion aus Schritt a) schließt eine oder mehrere Fraktionen ein. Die genannten hochsiedenden Fraktionen schließen dabei grundsätzliche alle Fraktionen ein, die einen Siedepunkt aufweisen, der oberhalb des Siedeproduktes des gewünschten Zielproduktes liegt. Die Definition der hochsiedenden Produktfraktion(en) hängt somit insbesondere von der Art der im Schritt a) durchgeführten Umsetzung, den eingesetzten Ausgangsmaterialien sowie der zuvor durchgeführten destillativen Trennschritte ab. Das genannte Zielprodukt stellt üblicherweise das überwiegend gebildete Produkt des erfindungsgemäßen Verfahrens zur Herstellung von Chlorsilanen bzw. Methylchlorsilanen dar. Es können ein oder mehrere Zielprodukte gebildet werden. Insbesondere bei der Müller-Rochow-Synthese mit Methylchlorid fällt im allgemeinen nur ein Zielprodukt als Hauptprodukt an, nämlich Dimethyldichlorsilan. Im Falle der Hydrochlorierung mit Chlorwasserstoff erhält man im allgemeinen zwei Zielprodukte als Hauptprodukte, nämlich Trichlorsilan und Tetrachlorsilan. Liegen mehrere Zielprodukte vor, so werden in Schritt b) im allgemeinen als hochsiedende Produktfraktion(en) solche mit einem Siedepunkt verwendet, der oberhalb des Siedepunktes des höhersiedenden Zielproduktes liegt. Im Falle der Müller-Rochow-Synthese mit Methylchlorid stellt somit Dimethyldichlorsilan das gewünschte Zielprodukt dar. Es besitzt einen Siedepunkt bei Normaldruck (N.D. = 1013 mbar) von 70° C. Somit schließen die hochsiedenden Produktfraktionen aus Schritt a) in diesem Fall grundsätzlich alle oberhalb von 71°, bevorzugter oberhalb von 73°C, noch bevorzugter oberhalb 100°C siedenden Produktfraktionen ein.

Erfindungsgemäß kann eine oder mehrere der in Schritt a) gebildetene hochsiedenden Produktfraktionen im Schritt b) eingesetzt werden. Dies schließt insbesondere und erfindungsgemäß bevorzugt die Varianten ein, bei der die gesamte oberhalb des Siedepunktes des gewünschten Zielproduktes (bzw. der gewünschten Zielprodukte) siedende Fraktion, dem Schritt b) zugeführt wird und diejenige bei der nur die Hochsieder mit Siedepunkten oberhalb 160°C N.D. und die Feststoffe an dieser Reaktionsstufe vorbeigeführt werden. Es ist darüber hinaus erfindungsgemäß möglich, die oberhalb des Siedepunktes des gewünschte Zielproduktes (bzw. der gewünschten Zielprodukte) siedende Fraktion in mindestens zwei Teilfraktionen destillativ aufzutrennen und eine oder mehrere der dabei resultierenden Teilfraktionen dem Schritt b) zuzuführen.

### Schritt b)

In Schritt b) wird mindestens eine hochsiedende Produktfraktion aus Schritt a), wie vorstehend erläutert, mit mindestens einem Halogenid umgesetzt. Das Halogenid schließt beispielsweise Chlorwasserstoff, Alkylhalogenide, Arylchloride oder Allylchlorid ein. Hinsichtlich der genannten Alkylhalogenide und Arylhalogenide kann wegen bevorzugter Beispiele auf die Ausführungen zu Schritt a) verwiesen werden. Besonders bevorzugt wird im Schritt b) als Halogenid Chlorwasserstoff eingesetzt. Unter den Bedingungen des Schrittes b) kommt es insbesondere zur Addition der genannten Halogenide an die in der eingesetzten hochsiedende(n) Produktfraktion(en) enthaltene Verbindungen sowie bei Überschuß des Halogenids zu nachfolgenden Substitionsreaktionen unter Bildung von leichter siedenden Chlorsilanen, die hauptsächlich aus dem Zielprodukt bestehen. Die leichter siedende Fraktion wird bevorzugt der Chlorsilansynthese gemäß Schritt a) nachgeschalteten Trenneinheit zugeführt. Die Trennung ergibt sich durch den Dampfdruck der leicht siedenden Chlorsilanfraktion in Schritt b). Die Addition der Halogenide an die Verbindungen der hochsiedenden Produktfraktionen in Schritt b) findet bevorzugt an die in genannter Fraktion enthaltenen Disilane, wie der im Falle der Müller-Rochow-Synthese bevorzugt enthaltenen Trimethyltrichlordisilan und Dimethyltetrachlordisilan statt. Im Schritt b) erzeugt man methylreichere Di- und Polysilane, die sowohl in Form einer in veränderter Zusammensetzung verbleibenden Fr. 2 als auch im Sumpfablauf von b) auftreten und in Schritt c) überführt werden.

Die schwerer siedende Fraktion, der Sumpfablauf, aus dem Reaktionschritt b) also im Falle der Müller-Rochow-Synthese mit Siedepunkten oberhalb 155 °C N.D. wird dem Reaktionschritt c) zugeführt. Ebenso führt man alle verbleibenden Reste der Fraktion 71-150°C N.D. (inbesondere Fr. 1+2) aus der dem Schritt a) nachgeschalteten Trenneinheit dem Reaktionschritt c) zu.
Der Schritt b) wird bevorzugt bei Temperaturen von etwa 30 bis etwa 500 °C, bevorzugt etwa 140 bis 300°C in einem Druckbereich von bevorzugt etwa 0,3 bis etwa 50 bar, bevorzugter 2 bis 10 bar durchgeführt.
Die Umsetzung gemäß Schritt b) findet bevorzugt in Gegenwart katalytisch wirksamer Verbindungen statt. Derartige Verbindungen schließen beispielsweise ein: Tertiäre Amine oder Salze davon, und quaternäre Ammoniumsalze, Organische Säureamide, Alkyl- und Arylphosphine, Lewissäuren, wie Aluminiumtrichlorid, Eisentrichlord, Kupfer-(I) und (II)-chlorid, Bortrichlorid, Zinntetrachlorid, Edelmetallverbindungen in Form der Salze und Komplexverbindungen der Metalle der Platingruppe (Palladium, Ruthenium, Iridium, Rhodium, Platin, Nickel, Silber, Gold, etc.. Bevorzugt werden tertiäre Amine oder Salze davon, und quaternäre Ammoniumsalze eingesetzt (Die genannten, katalytisch wirksamen Verbindungen werden als Verbindung (2) bezeichnet). Besonders bevorzugt werden als Verbindungen (2) tertiäre C1 bis C12 Alkylamine, aliphatische, mono- und polycyclische Amine und aromatische heterocyclische Stickstoffverbindungen, deren Salze und deren Quaternierungsprodukte eingesetzt. Erfindungsgemäß besonders bevorzugt sind Imidazole, Tributylamin, Trihexylamin und Dimethyloctylamin.

Erfindungsgemäß ist auch der Fall eingeschlossen, dass der Schritt b) in Gegenwart von Feststoffaustrag aus dem Reaktor der Chlorsilansynthese des Schrittes a) durchgeführt wird. In diesem Fall wirken die darin enthaltenden Verbindungen als Katalysatoren.
Die Anwesenheit der genannten Katalysatoren in Schritt b) ist bevorzugt.
Neben der vorstehend erwähnten leichter siedenden Fraktion, die hauptsächlich weitere Zielprodukte, d.h. im Falle der Müller-Rochow-Synthese Dimethyldichlorsilan, Methyltrichlorsilan und Methylhydrogendichlorsilan also < 71 °C, enthält, wird in Schritt b) eine hochsiedende Fraktion gebildet, die im nachfolgenden Schritt c) eingesetzt wird. Ähnlich den vorstehend gemachten Erläuterungen zu Schritt a) handelt es sich bei der hochsiedenden Produktfraktion aus Schritt b) grundsätzlich um alle oberhalb des Siedepunktes des Zielproduktes siedenden Produkte, also im Falle der Müller-Rochow-Synthese mit Methylchlorid wiederum um alle Fraktionen die oberhalb von 71°C N.D., bevorzugter 73°, noch bevorzugter 100°C N.D. siedenden Fraktionen. Auch hier handelt es sich bevorzugt um die gesamte oberhalb des Zielproduktes siedenden Produktfraktion, die in den nachfolgenden Schritt c) eingesetzt wird. Es ist aber auch möglich, eine oder mehrere hochsiedenden Teilfraktionen in den nachfolgenden Schritt c) einzusetzen. Die dem Schritt b) entnommene hochsiedenden Produktfraktion bzw. entnommenen hochsiedenden Produktfraktionen, unterscheiden sich von den im Schritt a) entnommenen Hochsiederfraktion(en) insbesondere dadurch, dass die Anteile der mit Halogeniden nach Verfahren b) umsetzbaren Disilane verringert sind.
Das molare Verhältnis der Menge der in Schritt b) eingesetzten Halogenide bezogen auf die Menge der eingesetzten hochsiedenden Produktfraktion hängt insbesondere ab von dem Gehalt an reaktionsfähigen Disilanen in der Schritt a) entnommenen hochsiedenden Produktfraktion, und beträgt beispielsweise bezogen auf das in der hochsiedenden Produktfraktion enthaltene Trimethyltrichlordisilan und Dimethyltetrachlordisilan etwa 1 zu 1 bis 2.
Die Umsetzung des Schrittes b) kann in einer Gas-Flüssig- oder Gas-GasPhasenreaktion beispielsweise in einem Reaktionskessel oder einer Reaktionskolonne durchgeführt werden.

### Schritt c)

Im nachfolgenden Schritt c) erfolgt die weitere Umsetzung mindestens einer aus Schritt b) resultierenden hochsiedenden Produktfraktion mit Alkylhalogeniden, Arylhalogeniden und/oder Chlorsilanen. Bezüglich der aus Schritt b) resultierenden hochsiedenden Produktzusammensetzung kann auf die vorstehend im Zusammenhang mit Schritt b) gemachten Ausführungen verwiesen werden.
Bevorzugt erfolgt im Schritt c) die Umsetzung der aus Schritt b) resultierenden hochsiedenden Produktfraktion mit Alkylhalogeniden,Arylhalogeniden oder Chlorsilanen. Bevorzugt wird das im Schritt c) verwendete Alkylhalogenid aus der Gruppe ausgewählt, die aus C1 bis C8 Alkylhalogeniden, wie beispielsweise Methylchlorid, Ethylchlorid, Butylchlorid und Hexylchlorid, C2 bis C6 Alkenylhalogeniden, wie Allylchlorid, und C6-C10 Arylhalogeniden, wie zum Beispiel Chlorbenzol , Chlorsilanen, wie Dimethyldichlorsilan, Methyltrichlor-silan, Methylhydrogendichlorsilan, Tetrachlorsilan, Hexachlordisilan, Tetramethyldichlordisilan, andere chlorhaltige Alkyldisilane und wie u.a. der in Tabelle 1 unter Fraktion 4 genannten Carbosilane besteht.
In einer bevorzugten Ausführungsform des erfindungsgemäßen Verfahrens werden in den Schritten a) und c) identische Alkylhalogenide, besonders bevorzugt Methylchlorid verwendet.
Der Schritt c) wird in einer bevorzugten Ausführungsform in Gegenwart mindestens eines Metalles oder dessen Verbindung, bevorzugt eines Halogenids, durchgeführt, das aus der Gruppe ausgewählt ist, die aus Cu, Zn, Sn, Al, Fe, Ca, Mn, Ti, Pb, Cr, Mg, Ni, B und P besteht. Die Elemente können als Metalle, Verbindungen, Kationen oder Anionen im Bereich von 1 ppm bis 30 Gew.-% vorliegen. In einer besonders bevorzugten Ausführungsform der vorstehenden Variante wird eines der genannten Metalle oder eine Metallverbindungen dem Schritt c) durch Feststoffaustrag aus dem Reaktor der Chlorsilan-Synthese (Schritt a)) zugeführt. Der genannte Feststoffaustrag setzt sich im allgemeinen aus Si, Cu-silicid, CuCl, CuCl₂, ZnCl₂, SnCl₄, AlCl₃, FeCl₂, CaCl₂ , anderen Siliciden, Rußen (Kohlenstoffablagerungen) und darüber hinaus Spuren der Chloride von Mn, Ti, Pb, Cr, Mg, Ni und P zusammen, enthält also in der Regel auch eines der genannten Salze. Der erfindungsgemäße Feststoffaustrag schließt an sich sämtliche aus dem Reaktor der Chlorsilansynthese ausgetragene Feststoffe ein. Sie können vollständig in den Schritt c) eingeführt werden. Erfindungsgemäß wird jedoch bevorzugt nur ein Teil, nämlich der sogenannte Feinanteil des genannten Feststoffaustrags der Umsetzung im Schritt c) zugeführt. Dazu wird der Feststoffaustrag im allgemeinen zunächst, nachdem er den Chlorsilanreaktor verlassen hat, in eine oder mehrere Feststofffraktionen durch einen oder mehrere Zyklone aufgetrennt. Bevorzugt wird dem Schritt c) nur eine Fraktion des Feststoffaustrags mit einem durchschnittlichen Partikeldurchmesser von weniger als etwa 35 µm, bevorzugter von weniger als etwa 5 µm zugeführt. Besonders bevorzugt wird der gesamte Feinanteil von weniger als 5 µm dem Schritt c) zugeführt. Der Anteil des elementaren Si im in den Schritt c) zurückgeführten Feinanteil des Feststoffaustrags beträgt etwa 50 bis 90 Gew.-%, der Anteil von Kupfer oder Kupferverbindungen beträgt, bezogen auf Kupfer, etwa 1 bis 20 Gew.-%, der Anteil von Eisen oder Eisenverbindungen beträgt bezogen auf Eisen etwa 0,5 bis 10 Gew.-%, der Anteil von Zink oder Zinkverbindungen beträgt bezogen auf Zink etwa 0,05 bis etwa 0,9 Gew.-%, wobei sich die genannten Gewichtsangaben auf die Gesamtmenge des Feinanteils des Feststoffaustrags beziehen. Erfahrungsgemäß liegen mindestens etwa 10 mol-% der im Feinanteil des Feststoffaustrags enthaltenen Metalle in der Form ihrer Halogenide, insbesondere als Chloride vor. Grobkörnigere Anteile des Feststoffaustrags werden bevorzugt in den Reaktor der Chlorsilansynthese (Schritt a)) zurückgeführt oder separat trocken abgeschieden. Das in dem Feinanteil enthaltene Silizium steht im Schritt c) der Umsetzung mit den genannten Alkylhalogeniden, Arylhalogeniden und/oder Chlorsilanen zur Verfügung. Die Verfahrenseinheit c) dient also einerseits dazu den Feinanteil des Feststoffes aus Schritt a) aufzunehmen, die hochsiedenden Bestandteile zu verdampfen, Feststoff und nicht verdampfbare Bestandteile zur Rückstandsbeseitigung, Verbrennung oder Hydrolyse zu entlassen und die Reaktion c) durchzuführen. Die ersten beiden Verfahrenschritte werden nach dem Stand der Technik schon in dieser Verfahrenseinheit durchgeführt. Deswegen findet man diese unter dem Namen Schlammkessel oder 'Slurry Evaporator' in der Literatur.
Es wird vermutet, dass die in dem Feinanteil enthaltenen Metalle bzw. Metallverbindungen sowie Salze einerseits als Katalysatoren der Umsetzung zwischen den in der hochsiedenden Produktfraktion enthaltenen Verbindungen und den zugeführten Alkylhalogeniden, Arylhalogeniden und/oder Chlorsilanen dienen und andererseits als Halogenierungsmittel beispielsweise für sauerstoffhaltige Siliziumverbindungen und/oder Carbosilane zur Verfügung stehen.
Die Umsetzung des Schrittes c) wird bevorzugt in Gegenwart mindestens einer Verbindung (1) durchgeführt wird, die ausgewählt wird aus der Gruppe, die aus tertiären Aminen oder einem Salz davon und quaternären Ammoniumsalzen besteht.
Bevorzugt schließt die genannte Verbindung (1) tertiäre C1 bis C12 Alkylamine, aliphatische, mono- und polycyclische Amine und aromatische heterocyclische Stickstoffverbindungen, deren Salze und deren Quaternierungsprodukte ein. Besonders bevorzugt handelt es sich bei der Verbindung (1) um Triethylamin, Tributylamin, Trihexylamin, Imidazol und Dimethyloctylamin, deren Salze und deren Quaternierungsprodukte. Am meisten bevorzugt ist Tributylamin. In einer bevorzugten Variante wird die in Schritt c) verwendete Verbindung (1) über die aus

Schritt b) resultierende hochsiedende Produktfraktion, die die im Schritt b) zugesetzte Verbindung (2), ausgewählt aus tertiären Aminen oder Salzen davon und quaternären Ammoniumsalzen, enthält, in den Schritt c) eingetragen. Gegebenenfalls können auch sowohl in Schritt b) als auch in Schritt c) Verbindungen, ausgewählt aus tertiären Aminen oder Salzen davon und quaternären Ammoniumsalzen zugesetzt werden. Die im Schritt c) zugesetzten Verbindungen wirken als Katalysatoren der Umsetzung der reaktionsfähigen hochsiedenden Verbindungen in der genannten hochsiedenden Produktfraktion. Es wird außerdem angenommen, dass die genannten Verbindungen (1) Disproportionierungsreaktionen von Di- und Polysilanen, bevorzugt methylreichen Disilanen, zu monomeren Silanen und höhermolekularen Oligosilanen katalysiert. Daneben können weitere katalysierte Austauschreaktionen von Chlor- und Hydrogen-Substituenten stattfinden.
Die Konzentration der Verbindungen (1) und/oder (2) im Schritt b) bzw. c) beträgt zweckmäßig etwa 0,3 bis 10 Gew.-%, bevorzugt 0,5 bis 10 Gew.-%, besonders bevorzugt von 1,5 bis 8 Gew.-%, speziell 2,5 und 7 Gew.-%, bezogen auf die Gesamtmenge des Eingangstromes Stroms für den Schritt b) .
Die Masse der aus der Umsetzung aus Schritt b) resultierenden hochsiedenden Produktfraktion in Schritt c) zwischen 0 und 99 Gew.-% bezogen auf die eingesetzten Alkylhalogenide, Arylhalogenide, Hochsieder, monomeren Chlorsilane und /oder Feststoffe beträgt.
Die Masse des im Schritt c) bevorzugt verwendeten Feststoffaustrags aus dem Reaktor der Chlorsilan-Synthese aus a) beträgt bevorzugt zwischen 0 und 70 Gew.-%, bevorzugt zwischen 5 bis 30 Gew.-%, bezogen auf die Menge der aus Schritt b) resultierenden hochsiedenden Produktfraktion. Bezogen auf die Gesamtmenge aller in Schritt c) vorhandenen Chlorsilane liegt der Feststoffaustrag in c) unter 55 Gew. % , bevorzugt unter 45 Gew.%.
Der Schritt c) des erfindungsgemäßen Verfahrens wird zweckmäßig bei einer Temperatur von 100 bis 300°C, bevorzugt 150 bis 250 °C, besonders bevorzugt in einem Bereich von 160 bis 240°C durchgeführt. Der Schritt c) des erfindungsgemäßen Verfahrens wird zweckmäßig bei einem Druck von 1 bis 21 bar, bevorzugt 1 bis 5 bar durchgeführt.

Da der in Schritt c) bevorzugt zugesetzte Feinstanteil des Feststoffaustrags der Chlorsilansynthese im allgemeinen im sogenannten Schlammkessel abgeschieden wird, erfolgt der Schritt c) bevorzugt dort. Dadurch wird für die Umsetzung des Schrittes c) kein zusätzlicher Reaktionsbehälter benötigt. In einer noch bevorzugteren Ausführungsform der Erfindung ist der sogenannte Schlammkessel zwischen dem Chlorsilanreaktor und der dahinter liegenden Destillationseinheit angeordnet, so dass der Rohsilanstrom über vorgelagerte Feststoffabscheider in den Schlammkessel gelangt, von wo nach Abtrennung des Feinanteils des Feststoffaustrags der verdampfbare Rohsilanstrom in die Destillationseinheit gelangt und besonders hochsiedender Anteil in diesem Kessel verbleibt. Der hochsiedende Anteil des Rohsilanstromes aus der Destillationseinheit wird wie oben dargelegt dem Schritt b) zugeführt. Nach Durchführung des Schrittes c) im Schlammkessel, der zwischen Chlorsilansynthesereaktor und Destillationseinheit liegt, wird der in Schritt c umgesetzte, verdampfbare Teil des aus dem Schritt b) resultierenden hochsiedenden Produktstromes wieder dem Einlauf in b) zugeführt oder separat ausgeschleust. Im Schlammkessel c), wird in Gegenwart des dort vorhandenen Feinstanteiles des Feststoffaustrags der Strom b) und dem mit den Feststoffen eingetragenen unter diesen Bedingungen nicht verdampfbaren Hochsiedern mit den Alkyl-, Aryl- und/oder Chlorsilanen umgesetzt, so dass praktisch die gesamte hochsiedende Produktfraktion vorteilhaft im Kreislauf geführt wird. Gleichzeitig wird ein Teil des Feststoffanteiles und der nicht reaktionsfähigen Hochsiederanteile aus diesem Reaktionskessel zur Rückstandsentsorgung kontinuierlich oder periodisch entlassen. Dies führt über alle Zu- und Abströme bilanziert zu einer besonders ausgeprägten Verringerung des Anteils der hochsiedenden Produktfraktion der Chlorsilansynthese.

Das erfindungsgemäße Verfahren der stufenweise Umsetzung der Hochsieder führt überraschend zu einer Verringerung der hochsiedenden Anteile in der Chlorsilansynthese, insbesondere bei der Müller-Rochow-Synthese mit Methylchlorid im Vergleich zu einer einstufigen Umsetzung der hochsiedenden Produktfraktion der Chlorsilansynthese.
Die Erfindung betrifft weiterhin ein Verfahren zur Herstellung von Chlorsilanen, dass die Schritte umfasst:
b) Umsetzung mindestens einer hochsiedenden Produktfraktion aus einer Chlorsilansynthese mit Halogeniden und
c) Umsetzung mindestens einer aus Schritt b) resultierenden hochsiedenden Produktfraktion mit Alkylhalogeniden, Arylhalogeniden und/oder Chlorsilanen.
Dabei werden die Schritte b) und c) bevorzugt wie vorstehend erläutert durchgeführt.

Die Erfindung betrifft weiterhin ein Verfahren zur Verringerung der hochsiedenden Produktfraktion von Chlorsilansynthesen, dass die Unterwerfung von hochsiedenden Produktfraktionen von Chlorsilansynthesen den Schritten b) und c), wie vorstehend definiert, umfasst.

Im Ergebnis der vorstehend beschriebenen Reaktionsfolge werden halogenierte Silane und mit HCl gemäß Schritt b) halogenierte monomere, Di- und Polysilane erhalten. Die Ausbeuten der Reaktion liegen, bezogen auf die eingesetzte Menge und Art der hochsiedenden, spaltbaren Rückstände oberhalb 71 °C N.D. beispielhaft bei 10 bis 90 Gew.% für Schritt b) und für den verbleibenden Strom in der Stufe c) bei 3 bis 60 Gew.% bezogen auf den Eingangstrom b).
Die nach der Reaktionsfolge b) + c) gebildete Feststoffsuspension kann wie üblich verbrannt, hydrolysiert oder zur Gewinnung weiterer Produkte genutzt werden. Alternativ kann der nach der Reaktion verbleibende Rückstand einer Fest/Flüssig-Trennung zugeführt werden, um danach entsprechende weitere Wertstoffe zu gewinnen. Schließlich kann abschließend nach einer geeigneten Nachbehandlung bzw. Passivierung der Chlorsilane bzw. des pyrophoren Feststoffes eine weitere Nutzung oder Deponierung erfolgen.
Es liegt im Bereich der Erfindung, daß bei Nutzung der erfindungsgemäßen Verfahrensweise mindestens zwei der nachfolgend aufgeführten Prozesse ablaufen:
- katalytische Reaktion von hochsiedendem, nicht mehr spaltbarem Rückstand mit den Feinanteilen und Halogensilanen/H-bzw. Alkylhalogeniden
- katalytische Disproportionierung von Di und Polysilanen
- Chlorierung von Siloxanen
- katalytische Reaktion von Silicium Feinstanteilen mit Wasserstoff- bzw. Alkylhalogeniden

Im Ergebnis der Reaktionen in b) und c) verringert sich summarische die Menge an hochsiedendem, mit den Verfahren gemäß Schritt b) nicht mehr spaltbarem Rückstand und den Feinstanteilen signifikant.
Die Erfindung soll an Hand eines Beispieles erläutert werden.

### Beispiel 1

### Verfahrensschritt b)

Aus einem Rohsilanstrom von 18 t/h Methylchlorsilanen und 14 t/h Methylchlorid leitet man 1,20 t/h hochsiedende Rückstande mit ca. 48 Gew. % an Trimethyltrichlordisilan und Dimethyltetrachlordisilan (Fr. 3), 31 Gew. % der Fraktion 1 u. 2 sowie 21 Gew.% der Fraktion 4 aus Tabelle 1 (Rest Hochsieder Bp. > 200 °C N.D.) mit weniger als 0,3 Gew% Feststoff einem Reaktor bestehend aus einem Kessel und einer Füllkörperkolonne entsprechend Verfahrensschritt b) zu. In diesem Reaktor wird bei 150 °C und 4 bar unter Zusatz von 0,135 t/h HCl und 2,8 Gew.% Tributylamin bezgl. 1,2 t/h Einlauf eine verdampfbare leichtersiedende Fraktion (u.a. MeHSiCl₂, MeSiCl₃, Me₂SiCl₂) und Fr. 1 und 2 sowie ein schwerer siedender Rückstand erzeugt. Die leichtersiedende Fraktion (< 150°C 4 bar ) wird der Trenneinheit der Stufe a) zugeführt, deren Sumpfrücklauf (0,096 t/h) bestehend aus der Fraktion 1 und 2 erzeugt zusammen mit dem schwerer siedenden Rückstand (Fr. 4) einen Produktstrom (überwiegend Fraktionen 1-4) von 0,541 t/h mit einem Gehalt von ca. 10 Gew. % an Trimethyltrichlordisilan und Dimethyltetrachlordisilan sowie 54 Gew. % Anteil der Fraktion 1 und 2 sowie 36 Gew.% der Fraktion 4 aus Tabelle 1. Der Rest sind höhersiedende Bestandteile (Fr. 4 und höher) . Dieser Rückstandsstrom wird der Reaktionstufe c) zugeführt.

### Beispiel 2 Verfahrenschritt c)

Der Sumpfablauf aus dem Verfahrensschritt b) des Beispieles 1 wird zusammen mit den aus der Trenneinheit zurückgeführten Resten mit Bp. > 71 °C N.D. in einer Menge von 0,541 t/h hochsiedenden, in der Stufe b) nicht umgesetzten Rückständen sowie verbliebene Anteilen von Tributylamin bzw. dessen Umsetzungsprodukten zusammen mit 0,42 t/h Feinststaub der MCS-Synthese und 0,60 t/h einer nicht verdampfbaren Fraktion aus Di- und Polysilanen entsprechend der Fraktion 4, die darüber hinaus weitere höhersiedende Bestandteile des Müller-Rochow-Direktprozesses enthält, in einen Reaktionsbehälter (Schlammkessel) des Verfahrenschrittes c) eingeleitet. Dieser Reaktionsbehälter hat eine Temperatur von 180 °C und 4 bar Druck. Gleichzeitig befinden sich hierin auch die per Dampfdruckgleichgewicht vorhandene Menge an Methylchlorid und Methylchlorsilanen des in Beispiel 1 Rohsilan genannten Stromes.

Die Produkte mit Siedepunkten unter 180°C bei 4 bar verlassen den Kessel c), werden der besagten Destillationseinheit für den Rohsilanstrom der Stufe a) zugeführt, um Produkte mit Siedepunkten unterhalb 71 °C N.D. destillativ abzutrennen. Die Produkte mit Siedepunkten über 71 °C N.D. werden zurückgeführt und ergeben im stationären Zustand zusammen mit Feststoffen im Kessel c) einen Rückstandsstrom einer Menge von 1,24 t/h, der hieraus kontinuierlich entlassen wird.
Dies bedeutet, dass sich die Menge der Hochsiederfraktion aus b), der nicht verdampfbaren Rückstände in c) und der Feststoffe in der Stufe c) ausgehend von 1,561 t/h um 0,321 t/h verringert hat. Insgesamt kommt es bei den Schritten b) und c) zu einer Abnahme von 0,98 t/h entsprechend (0,42 t/h Feststoff c +0,6 t/h Polysilan-Einlauf in c +1,2 t/h Einlauf b) -(0,659 t/h Produkte b +0,321 t/h Produkte c) = 1,24 t/h Rückstände, d.h. der Rückstandsstrom wurde von 2,22 t/h um 0,98 t/h verringert.
Damit konnte die Menge der zur Verwertung bzw. Entsorgung aus dem Kessel im Schritt c) anfallenden Reststoffe im Vergleich zu dem Niveau ohne erfindungsgemäße Verknüpfung der Verfahrensschritte b) und c) deutlich gesenkt werden.

### Beispiel 3 (Vergleichsbeispiel)

Aus einem Rohsilanstrom von 18 t/h Methylchlorsilanen und 14 t/h Methylchlorid leitet man 1,2 t/h hochsiedende Rückstande mit ca. 48 Gew. % an Trimethyltrichlordisilan und Dimethyltetrachlordisilan (Fr. 3), 31 Gew. % der Fraktion 1 und 2 sowie 21 Gew.% der Fraktion 4 aus Tabelle 1 (Rest Hochsieder Bp. > 200 °C N.D.) mit weniger als 0,3 Gew% Feststoff einem Reaktor bestehend aus einem Kessel und einer Füllkörperkolonne zu. Einen weiteren mit dem Feststoff eingetragenen restlichen Teil der nicht verdampfbaren Hochsieder von 0,6 t/h beläßt man mit dem Feststoffstrom 0,42 t/h in dem Reaktor der Stufe c), dem Schlammkessel. In dem Reaktor der Stufe b) wird bei 150 °C und 4 bar unter Zusatz von 0,135 t/h HCl und 2,8 Gew. % Tributylamin bezgl. 1,2 t/h Einlauf eine verdampfbare leichter siedende Fraktion (u.a. MeHSiCl₂, MeSiCl₃, Me₂SiCl₂₎) und Fr. 1 u. 2) sowie ein schwerer siedender Rückstand erzeugt.

Die leichter siedende Fraktion (< 150°C 4 bar) wird der Trenneinheit der Stufe a) zugeführt, deren Sumpfrücklauf bestehend aus Anteilen der Fraktion 1 und 2 erzeugt zusammen mit dem schwerer siedenden Rückstand einen Produktstrom von 0,54 t/h mit einem Gehalt von ca. 10 Gew. % an Trimethyltrichlordisilan und Dimethyltetrachlordisilan sowie 54 Gew. % Anteil der Fraktion 1 und 2 sowie 36 Gew.% der Fraktion 4 aus Tabelle 1 incl. höhersiedender Bestandteile. Dieser Rückstandsstrom wird abweichend zu Beispiel 2 nicht der Reaktionstufe c) zugeführt, sondern verbleibt zur Entsorgung bzw. anderweitigen Nutzung.

Der Reaktor c) (Schlammkessel) bekommt abweichend zu Beispiel 2 nur den hochsiedenden Teilstrom entsprechend der Hochsiederfraktion 4 sowie von Produkten mit noch höheren Siedepunkten über 180°C N.D. im wesentlichen ohne Fraktion 3 (< 1 Gew.%), die aus dem in Schritt a) mit dem Feststoffaustrag eingetragen werden in einer Menge von 0,60 t/h zusammen mit 0,42 t/h Feinststaub des Müller-Rochow-Direktprozesses, 2,8 Gew.% Tributylamin bezgl. 0,6 t/h des flüssigen Teilstromes in c) sowie einer per Dampfdruckgleichgewicht vorhandenen Menge Methylchlorid und Methylchlorsilanen aus dem obengenannten genannten Rohsilanstrom. Der Reaktionsbehälter hat eine Temperatur von 180 °C Reaktionstemperatur bei 4 bar Reaktionsdruck.
Mindestens die Produkte mit Siedepunkten bis 160°C 4 bar verlassen den Kessel um, in einer destillativen Trennung des Dampfstromes Produkte mit Siedepunkten unterhalb 71 °C N.D. abzutrennen. Die Produkte mit Siedepunkten über 71 °C N.D. ergeben im stationären Zustand zusammen mit den Feststoffen einen Rückstandstrom im Kessel, der ohne erkennbaren Umsatz von 0,98- 1,02 t/h verbleibt und kontinuierlich entlassen wird.
Im Schritt b) war der Rückstandsstrom dort von 1,2 t/h um 0,541 t/h vermindert worden.
Der Gesamtumsatz über die Schritte b) und c) liegt damit aber nur bei 0,541 t/h pro 2,2 t/h im stationären Zustand. Als Bilanz ergibt sich (0,42 t/h Feststoffe c +0,60 t/h Fr. 4 Einlauf c +1,2 t/h Fr.1-4 Einlauf b) -(0,541 t/h Produkte b +0 t/h Produkte c) =1,679 t/h.

Dies bedeutet, daß sich die Menge der zu entsorgenden Hochsiederfraktionen, der nicht verdampfbaren Rückstände und Feststoffe weniger stark vermindert hat als bei einem Verfahren, das die Schritte von Beispiel 1 und 2 verknüpft. Insgesamt kommt es zu einer geringeren Abnahme der Rückstandsströme als im Vergleich zu Beispiel 1 und 2.

## Patentansprüche

1. Verfahren zur Herstellung von Chlorsilanen, dass die Schritte umfasst:
a) Umsetzung von Silizium mit Alkylhalogeniden, Arylhalogeniden oder Chlorwasserstoff,
b) Umsetzung mindestens einer hochsiedenden Produktfraktion aus Schritt a) mit mindestens einem Halogenid und
c) Umsetzung mindestens einer aus Schritt b) resultierenden hochsiedenden Produktfraktion mit Alkylhalogeniden, Arylhalogeniden und/oder Chlorsilanen.

2. Verfahren nach Anspruch 1, **dadurch gekennzeichnet, dass** der Schritt c) in Gegenwart mindestens eines Metalles oder dessen Verbindung durchgeführt wird, das aus der Gruppe ausgewählt ist, die aus Chloriden von Cu, Zn, Sn, Al, Fe, Ca, Mn, Ti, Pb, Cr, Mg, Ni, B und P besteht.

3. Verfahren nach Anspruch 2, **dadurch gekennzeichnet, dass** man die genannten Metalle bzw.Verbindungen in Form des Feststoffaustrags oder eines Teils davon aus dem Reaktor der Chlorsilan-Synthese in den Schritt c) einführt.

4. Verfahren nach einem der Ansprüche 1 bis 3, **dadurch gekennzeichnet, dass** der Schritt c) in Gegenwart mindestens einer Verbindung (1) durchgeführt wird, die ausgewählt wird aus der Gruppe, die aus tertiären Aminen oder einem Salz davon und quaternären Ammoniumsalzen besteht.

5. Verfahren nach Anspruch 3 oder 4, **dadurch gekennzeichnet, dass** der Feinstanteil des Feststoffaustrag aus dem Reaktor der Chlorsilan-Synthese mit einem durchschnittlichen Partikeldurchmesser von weniger als 35 µm dem Schritt c) zugeführt wird.

6. Verfahren nach einem der Ansprüche 1 bis 5, **dadurch gekennzeichnet, dass** der Schritt a) in einem Wirbelbettreaktor durchgeführt wird.

7. Verfahren nach einem der Ansprüche 1 bis 6, **dadurch gekennzeichnet, dass** im Schritt a) mindestens ein Alkylhalogenid mit Silizium umgesetzt wird.

8. Verfahren nach einem der Ansprüche 1 bis 7, **dadurch gekennzeichnet, dass** es sich bei dem in Schritt b) verwendeten Halogenid um Chlorwasserstoff handelt.

9. Verfahren nach einem der Ansprüche 1 bis 8, **dadurch gekennzeichnet, dass** im Schritt c) die Umsetzung der aus Schritt b) resultierenden hochsiedenden Produktfraktion mit Alkylhalogeniden oder Arylhalogeniden erfolgt.

10. Verfahren nach Anspruch 9, **dadurch gekennzeichnet, dass** das genannte, in Schritt c) verwendete Alkylhalogenid aus der Gruppe ausgewählt wird, die aus C1 bis C8 Alkylhalogeniden, wie beispielsweise Methylchlorid, Ethylchlorid, Butylchlorid und Hexylchlorid, C2 bis C6 Alkenylhalogeniden, wie Allylchlorid, besteht, und das genannte Arylhalogenid aus C6-C10 Arylhalogeniden, wie zum Beispiel Chlorbenzol ausgewählt wird.

11. Verfahren nach einem der Ansprüche 1 bis 10, **dadurch gekennzeichnet, dass** in Schritt a) und c) identische Alkylhalogenide verwendet werden.

12. Verfahren nach einem der Ansprüche 1 bis 11, **dadurch gekennzeichnet, dass** es sich bei dem in Schritt a) und c) verwendeten Alkylhalogenid um Methylchlorid handelt.

13. Verfahren nach einem der Ansprüche 4 bis 12, **dadurch gekennzeichnet, daß** die in Schritt c) verwendete Verbindung (1) aus der Gruppe ausgewählt wird, die aus tertiären C1 bis C12 Alkylaminen, aliphatischen, mono- und polycyclischen Aminen und aromatischen heterocyclischen Stickstoffverbindungen, deren Salze und deren Quaternierungsprodukte besteht.

14. Verfahren nach einem der Ansprüche 4 bis 13, **dadurch gekennzeichnet, daß** die in Schritt c) verwendete Verbindung (1) aus der Gruppe ausgewählt wird, die aus Triethylamin, Tributylamin, Trihexylamin, Imidazol und Dimethyloctylamin, deren Salze und deren Quaternierungsprodukte besteht.

15. Verfahren nach einem der Ansprüche 1 bis 14, **dadurch gekennzeichnet, dass** der Schritt b) in Gegenwart mindestens einer katalytisch wirksamen Verbindung (2) durchgeführt wird.

16. Verfahren nach Anspruch 15, **dadurch gekennzeichnet, dass** die Verbindung (2) ausgewählt wird aus der Gruppe, die aus tertiären Aminen oder Salzen davon und quaternären Ammoniumsalzen besteht.

17. Verfahren nach Anspruch 16, **dadurch gekennzeichnet, dass** die in Schritt c) verwendete Verbindung (1) über die aus Schritt b) resultierende hochsiedende Produktfraktion, die die im Schritt b) zugesetzte Verbindung (2), ausgewählt aus tertiären Aminen oder Salzen davon und quaternären Ammoniumsalzen, enthält, in den Schritt c) eingetragen wird.

18. Verfahren nach einem der Ansprüche 4 und 17, **dadurch gekennzeichnet, dass** die Konzentration der Verbindungen (1) und/oder (2) im Schritt b) bzw. c) von 0,3 bis 10 Gew.-%, bezogen auf die Gesamtmenge des Eingangstromes Stroms für den Schritt b) beträgt.

19. Verfahren nach einem der Ansprüche 1 bis 18, **dadurch gekennzeichnet, dass** die Masse der aus der Umsetzung in Schritt b) resultierende hochsiedende Produktfraktion in Schritt c) zwischen 0 und 99 Gew.-% bezogen auf die eingesetzten Alkylhalogenide, Arylhalogenide, Hochsieder, monomeren Chlorsilane und /oder Feststoffe beträgt.

20. Verfahren nach einem der Ansprüche 3 bis 19, **dadurch gekennzeichnet, dass** die Masse des eingesetzten Feststoffaustrags aus dem Reaktor der Chlorsilan-Synthese zwischen 0 und 70 Gew.-%, bezogen auf die Menge der aus Schritt b) resultierenden hochsiedenden Produktfraktion beträgt.

21. Verfahren nach einem der Ansprüche 1 bis 20, **dadurch gekennzeichnet, dass** der Schritt c) bei einer Temperatur von 100 bis 300°C durchgeführt wird.

22. Verfahren nach einem der Ansprüche 1 bis 21, **dadurch gekennzeichnet, dass** der Schritt c) bei einem Druck von 1 bis 21 bar durchgeführt wird.

23. Verfahren zur Herstellung von Chlorsilanen, dass die Schritte umfasst:
a) Umsetzung mindestens einer hochsiedenden Produktfraktion aus einer Chlorsilansynthese mit Halogeniden und
b) Umsetzung mindestens einer aus Schritt b) resultierenden hochsiedenden Produktfraktion mit Alkylhalogeniden, Arylhalogeniden und/oder Chlorsilanen.

24. Verfahren zur Herstellung von Chlorsilanen nach Anspruch 23, worin die Schritte b) und c), wie in einem der Ansprüche 2 bis 22 durchgeführt wird.

25. Verfahren zur Verringerung der hochsiedenden Produktfraktion von Chlorsilansynthesen, dass die Schritte b) und c), wie in den Ansprüchen 23 oder 24 definiert, umfasst.

## Claims

1. Process for manufacturing chlorosilanes, comprising the steps of:
a) reacting silicon with alkyl halides, aryl halides or hydrogen chloride,
b) reacting at least one high-boiling product fraction from step a) with at least one halide and
c) reacting at least one high-boiling product fraction resulting from step b) with alkyl halides, aryl halides and/or chlorosilanes.

2. Process according to Claim 1, **characterized in that** step c) is carried out in the presence of at least one metal or a compound thereof selected from the group consisting of chlorides of Cu, Zn, Sn, Al, Fe, Ca, Mn, Ti, Pb, Cr, Mg, Ni, B and P.

3. Process according to Claim 2, **characterized in that** said metals or compounds are introduced into step c) in the form of the solid discharge, or a part thereof, from the reactor of the chlorosilane synthesis.

4. Process according to one of Claims 1 to 3, **characterized in that** step c) is carried out in the presence of at least one compound (1) that is selected from the group consisting of tertiary amines or a salt thereof and quaternary ammonium salts.

5. Process according to Claim 3 or 4, **characterized in that** the finest portion of the solid discharge from the reactor of the chlorosilane synthesis, which portion has an average particle diameter of less than 35 µm, is supplied to step c).

6. Process according to one of Claims 1 to 5, **characterized in that** step a) is carried out in a fluidized bed reactor.

7. Process according to one of Claims 1 to 6, **characterized in that** at least one alkyl halide is reacted with silicon in step a).

8. Process according to one of Claims 1 to 7, **characterized in that** the halide used in step b) is hydrogen chloride.

9. Process according to one of Claims 1 to 8, **characterized in that** the reaction of the high-boiling product fraction resulting from step b) is carried out with alkyl halides or aryl halides in step c).

10. Process according to Claim 9, **characterized in that** said alkyl halide used in step c) is selected from the group consisting of C1 to C8 alkyl halides, such as, for example, methyl chloride, ethyl chloride, butyl chloride and hexyl chloride, and C2 to C6 alkenyl halides, such as alkyl chloride, and said aryl halide is selected from the C6-C10 aryl halides, such as, for example, chlorobenzene.

11. Process according to one of Claims 1 to 10, **characterized in that** identical alkyl halides are used in steps a) and c).

12. Process according to one of Claims 1 to 11, **characterized in that** the alkyl halide used in steps a) and c) is methyl chloride.

13. Process according to one of Claims 4 to 12, **characterized in that** the compound (1) used in step c) is selected from the group consisting of tertiary C1 to C12 alkylamines, aliphatic, monocyclic and polycyclic amines and aromatic heterocyclic nitrogen compounds, their salts and their quaternization products.

14. Process according to one of Claims 4 to 13, **characterized in that** the compound (1) used in step c) is selected from the group consisting of triethylamine, tributylamine, trihexylamine, imidazole and dimethyloctylamine, their salts and their quaternization products.

15. Process according to one of Claims 1 to 14, **characterized in that** step b) is carried out in the presence of at least one catalytically active compound (2).

16. Process according to Claim 15, **characterized in that** compound (2) is selected from the group consisting of tertiary amines or salts thereof and quaternary ammonium salts.

17. Process according to Claim 16, **characterized in that** the compound (1) used in step c) over the high-boiling product fraction resulting from step b) that contains the compound (2) added in step b) selected from tertiary amines or salts thereof and quaternary ammonium salts is entered into step c).

18. Process according to one of Claims 4 and 17, **characterized in that** the concentration of the compounds (1) and/or (2) in step b) or c) is from 0.3 to 10 weight-%, relative to the total quantity of the input stream for step b).

19. Process according to one of Claims 1 to 18, **characterized in that** the mass of the high-boiling product fraction resulting from the reaction in step b) is between 0 and 99 weight-% in step c), relative to the alkyl halides, aryl halides, high-boiling compounds, monomeric chlorosilanes and/or solids used.

20. Process according to one of Claims 3 to 19, **characterized in that** the mass of the solid discharge from the reactor of the chlorosilane synthesis that is used is between 0 and 70 weight-%, relative to the amount of the high-boiling product fraction resulting from step b).

21. Process according to one of Claims 1 to 20, **characterized in that** step c) is carried out at a temperature of from 100 to 300°C

22. Process according to one of Claims 1 to 21, **characterized in that** step c) is carried out at a pressure of from 1 to 21 bar.

23. Process for manufacturing chlorosilanes comprising the steps of:
a) reacting at least one high-boiling product fraction from a chlorosilane synthesis with halides and
b) reacting at least one high-boiling product fraction resulting from step b) with alkyl halides, aryl halides and/or chlorosilanes.

24. Process for manufacturing chlorosilanes according to claim 23, wherein the steps b) and c) are carried out as in any one of Claims 2 to 22.

25. Process for decreasing the high-boiling product fraction of chlorosilane syntheses that comprises the steps b) and c), as defined in Claims 23 or.

## Revendications

1. Procédé de préparation de chlorosilanes, qui comprend les étapes de :
a) réaction du silicium avec des halogénures d'alkyle, des halogénures d'aryle ou le chlorure d'hydrogène,
b) réaction d'au moins une fraction de produit à haut point d'ébullition de l'étape a), avec au moins un halogénure, et
c) réaction d'au moins une fraction de produit à haut point d'ébullition résultant de l'étape b), avec des halogénures d'alkyle, des halogénures d'aryle et/ou des chlorosilanes.

2. Procédé selon la revendication 1, **caractérisé en ce que** l'étape c) est réalisée en présence d'au moins un métal ou de son composé, qui est choisi parmi le groupe, qui consiste en les chlorures de Cu, Zn, Sn, Al, Fe, Ca, Mn, Ti, Pb, Cr, Mg, Ni, B et P.

3. Procédé selon la revendication 2, **caractérisé en ce que** l'on introduit dans l'étape c), les métaux ou composés cités sous la forme de la décharge de matières solides ou d'une partie de celle-ci, provenant du réacteur de la synthèse de chlorosilane.

4. Procédé selon l'une des revendications 1 à 3, **caractérisé en ce que** l'étape c) est réalisée en présence d'au moins un composé (1), qui est choisi parmi le groupe des amines tertiaires ou d'un sel de celles-ci et de sels d'ammonium quaternaire.

5. Procédé selon la revendication 3 ou 4, **caractérisé en ce que** la fraction de matières fines avec un diamètre moyen des particules de moins de 35 µm, de la décharge de matières solides provenant du réacteur de synthèse de chlorosilane est introduite dans l'étape c).

6. Procédé selon l'une des revendications 1 à 5, **caractérisé en ce que** l'étape a) est réalisée dans un réacteur à lit fluidisé.

7. Procédé selon l'une des revendications 1 à 6, **caractérisé en ce que** dans l'étape a), on fait réagir au moins un halogénure d'alkyle avec le silicium.

8. Procédé selon l'une des revendications 1 à 7, **caractérisé en ce que** l'halogénure utilisé à l'étape b) consiste en le chlorure d'hydrogène.

9. Procédé selon l'une des revendications 1 à 8, **caractérisé en ce que** dans l'étape c), la réaction de la fraction de produit à haut point d'ébullition résultant de l'étape b) est réalisée avec des halogénures d'alkyle ou des halogénures d'aryle.

10. Procédé selon la revendication 9, **caractérisé en ce que** l'halogénure d'alkyle indiqué, utilisé à l'étape c) est choisi parmi le groupe qui consiste en les halogénures d'alkyle en C1 à C8, comme par exemple le chlorure de méthyle, le chlorure d'éthyle, le chlorure de butyle et le chlorure d'hexyle, les halogénures d'alcényle en C2 à C6, comme le chlorure d'allyle, et l'halogénure d'aryle consiste en des halogénures d'aryle en C6 à C10, comme par exemple le chlorobenzène.

11. Procédé selon l'une des revendications 1 à 10, **caractérisé en ce que** dans les étapes a) et c), on utilise des halogénures d'alkyle identiques.

12. Procédé selon l'une des revendications 1 à 11, **caractérisé en ce que** l'halogénure d'alkyle utilisé dans les étapes a) et c) consiste en le chlorure de méthyle.

13. Procédé selon l'une des revendications 4 à 12, **caractérisé en ce que** le composé (1) utilisé à l'étape c) est choisi parmi le groupe qui consiste en des alkylamines tertiaires en C1 à C12, des amines aliphatiques, mono- et polycycliques et des composés azotés hétérocycliques aromatiques, leurs sels et leurs produits de quaternisation.

14. Procédé selon l'une des revendications 4 à 13, **caractérisé en ce que** le composé (1) utilisé à l'étape c) est choisi parmi le groupe qui consiste en la triéthylamine, la tributylamine, la trihexylamine, l'imidazole et la diméthyloctylamine, leurs sels et leurs produits de quaternisation.

15. Procédé selon l'une des revendications 1 à 14, **caractérisé en ce que** l'étape b) est réalisée en présence d'au moins un composé (2) actif de manière catalytique.

16. Procédé selon la revendication 15, **caractérisé en ce que** le composé (2) est choisi parmi le groupe, qui consiste en des amines tertiaires ou leurs sels et des sels d'ammonium quaternaires.

17. Procédé selon la revendication 16, **caractérisé en ce que** le composé (1) utilisé à l'étape c) est ajouté à la fraction de produit de haut point d'ébullition résultant de l'étape b), qui contient le composé (2) ajouté à l'étape b), choisi parmi des amines tertiaires ou leurs sels et des sels d'ammonium quaternaires.

18. Procédé selon l'une des revendications 4 à 17, **caractérisé en ce que** la concentration en composé (1) et/ou (2) dans l'étape b) et respectivement, c) se situe dans l'intervalle allant de 0,3 à 10% en poids, sur base de la quantité totale de courant introduit pour l'étape b).

19. Procédé selon l'une des revendications 1 à 18, **caractérisé en ce que** la masse de la fraction de produit de haut point d'ébullition résultant de la réaction de l'étape b), dans l'étape c), se situe dans l'intervalle allant de 0 à 99% en poids, sur base des halogénures d'alkyle, halogénures d'aryle, produits de haut point d'ébullition, chlorosilanes monomères et/ou matières solides mis en oeuvre.

20. Procédé selon l'une des revendications 3 à 19, **caractérisé en ce que** la masse de la décharge de matières solides mise en oeuvre, provenant du réacteur de synthèse du chlorosilane, se situe dans l'intervalle allant de 0 à 70% en poids, sur base de la masse de la fraction de produit de haut point d'ébullition résultant de l'étape b).

21. Procédé selon l'une des revendications 1 à 20, **caractérisé en ce que** l'étape c) est réalisée à une température allant de 100 à 300°C.

22. Procédé selon l'une des revendications 1 à 21, **caractérisé en ce que** l'étape c) est réalisée à une pression allant de 1 à 21 bars.

23. Procédé de préparation de chlorosilanes, qui comprend les étapes de :
a) réaction d'au moins une fraction de produit à haut point d'ébullition d'une synthèse de chlorosilane avec des halogénures, et
b) réaction d'au moins une fraction de produit à haut point d'ébullition résultant de l'étape a), avec des halogénures d'alkyle, des halogénures d'aryle et/ou des chlorosilanes.

24. Procédé de préparation de chlorosilanes selon la revendication 23, où les étapes a) et b) sont réalisées comme dans l'une des revendications 2 à 22.

25. Procédé de diminution de la fraction de produit à haut point d'ébullition de synthèses de chlorosilanes, qui comprend les étapes a) et b) définies aux revendications 23 ou 24.
